# FASCICULE DE BREVET EUROPEEN

(11) **EP 2 753 482 B1**
(45) Date de publication et mention de la délivrance du brevet: **12.07.2017**
(21) Numéro de dépôt: 12759651.8
(22) Date de dépôt: 04.09.2012
(51) Int. Cl.: B60H 1/22, F24H 1/12, F24H 9/00

(54) **DISPOSITIF DE CHAUFFAGE ÉLECTRIQUE POUR VÉHICULE AUTOMOBILE, ET APPAREIL DE CHAUFFAGE ET/OU DE CLIMATISATION ASSOCIÉ**
ELEKTRISCHE HEIZVORRICHTUNG FÜR EIN KRAFTFAHRZEUG UND ZUGEHÖRIGE KLIMA- UND/ODER HEIZEINHEIT
ELECTRICAL HEATING DEVICE FOR A MOTOR VEHICLE AND ASSOCIATED AIR-CONDITIONING AND/OR HEATING UNIT

(30) Priorité: 06.09.2011 FR 1102698
(43) Date de publication de la demande: 16.07.2014
(73) Titulaire: Valeo Systemes Thermiques, 78321 Le Mesnil Saint Denis (FR)
(72) Inventeur: PIERRON, Frédéric, F-78322 Le Mesnil Saint-Denis cédex (FR); TELLIER, Laurent, F-78322 Le Mesnil Saint Denis cédex (FR); LEBORGNE, José, F-78322 Le Mesnil Saint Denis cédex (FR)
(74) Mandataire: Tran, Chi-Hai
(86) Numéro de dépôt international: PCT/EP2012/003686
(87) Numéro de publication internationale: WO 2013/034275

(56) Documents cités:
- EP-A1- 1 872 986
- WO-A1-2010/021939
- WO-A2-2011/054970
- US-A- 3 209 126
- US-A- 4 199 675
- US-A- 5 434 388
- US-A- 6 053 132

## Description

L'invention concerne un dispositif de chauffage électrique pour véhicule automobile. L'invention s'applique plus particulièrement aux appareils de chauffage et/ou climatisation de véhicules automobiles.

De façon habituelle, le réchauffage de l'air destiné au chauffage de l'habitacle d'un véhicule automobile, ainsi qu'au désembuage et au dégivrage est assuré par passage d'un flux d'air à travers un échangeur de chaleur, plus précisément par un échange de chaleur entre le flux d'air et un liquide.

En général, il s'agit du liquide de refroidissement dans le cas d'un moteur thermique.

Toutefois, ce mode de chauffage peut s'avérer inadapté ou insuffisant pour garantir un chauffage rapide et efficace de l'habitacle du véhicule, en particulier pour assurer un réchauffement de l'habitacle ou dégivrage ou désembuage avant utilisation du véhicule en environnement très froid ou encore lorsqu'une montée très rapide de la température est souhaitée.

Dans le cas d'un véhicule électrique, la fonction de chauffage n'est plus réalisée par la circulation du liquide de refroidissement dans l'échangeur de chaleur.

On peut prévoir un circuit d'eau pour le chauffage de l'habitacle.

Ce mode de chauffage peut aussi s'avérer inadapté ou insuffisant pour garantir un chauffage rapide et efficace de l'habitacle du véhicule.

Par ailleurs, afin de réduire l'encombrement et le coût du fait du circuit d'eau supplémentaire, il est également connu d'utiliser pour le véhicule électrique, une boucle de climatisation fonctionnant en mode pompe à chaleur. Ainsi, la boucle de climatisation permettant classiquement de refroidir un flux d'air à l'aide d'un fluide réfrigérant, est dans ce cas utilisée de façon à réchauffer le flux d'air. Il convient pour ce faire d'utiliser un évaporateur de la boucle de climatisation comme un condenseur.

Toutefois, ce mode de chauffage aussi peut s'avérer inadapté ou insuffisant. En effet, les performances de la boucle de climatisation en mode pompe à chaleur dépendent des conditions climatiques extérieures; et en cas d'air extérieur avec une température trop basse cet air ne peut pas être utilisé comme source d'énergie thermique.

Pour pallier ces inconvénients de l'art antérieur, une solution connue consiste à adjoindre à l'échangeur de chaleur ou au circuit d'eau ou encore à la boucle de climatisation, un dispositif de chauffage électrique additionnel.

Un tel dispositif de chauffage électrique peut être adapté pour chauffer en amont le liquide, tel que le liquide de refroidissement pour le moteur thermique, ou l'eau pour le circuit d'eau de chauffage de l'habitacle du véhicule électrique ou encore le fluide réfrigérant de la boucle de climatisation.

Cependant, les dispositifs de chauffage électriques connus peuvent présenter une perte de charge importante.

La demande de brevet WO 2010/021939 a pour objet un échangeur thermique à écoulement spiralé à transfert thermique élevé. Cet échangeur comprend un tube chauffant dans lequel circule un fluide à chauffer et dont la paroi comporte une couche électrique.

Cependant, cet échangeur thermique n'est pas prémuni contre le risque de fuite du liquide à chauffer ainsi que contre les risques de fuite thermique et électrique.

L'invention a donc pour objectif de proposer un dispositif de chauffage électrique avec un encombrement réduit et permettant de réduire la perte de charge et qui permet d'éviter les fuites électriques, thermiques ainsi que celle du liquide à chauffer.

À cet effet, l'invention a pour objet un dispositif de chauffage électrique de liquide pour véhicule automobile selon la revendication 1. L'invention concerne également un appareil de chauffage et/ou climatisation pour véhicule automobile, caractérisé en ce qu'il comporte un dispositif de chauffage électrique tel que défini précédemment.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 représente de façon schématique et simplifiée un appareil de chauffage de véhicule automobile comprenant un dispositif de chauffage électrique additionnel,
- la figure 2 est une vue en coupe du dispositif de chauffage selon un premier mode de réalisation.

Dans ces figures, les éléments sensiblement identiques portent les mêmes références.

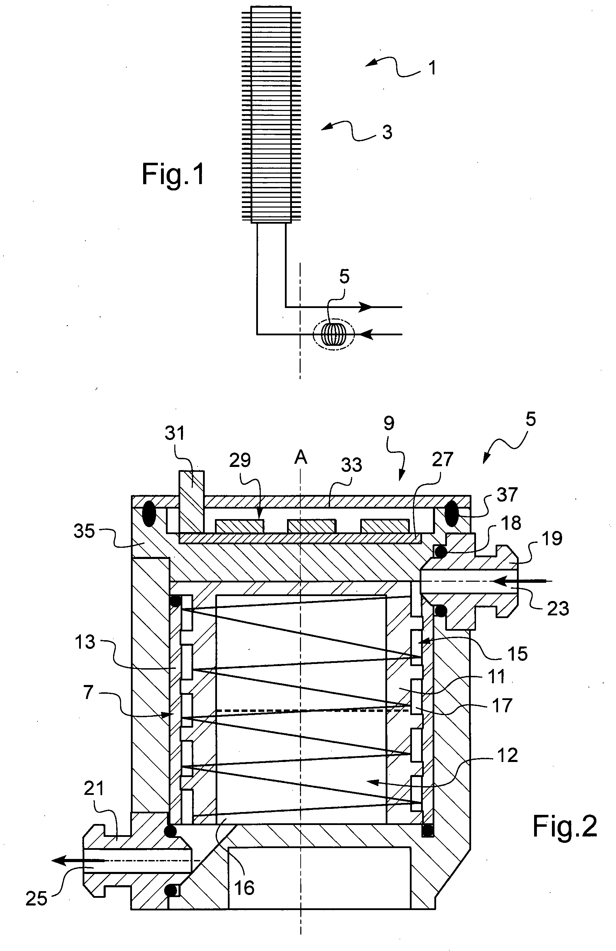

La figure 1 montre de façon schématique une partie d'un appareil de chauffage et/ou climatisation 1 de véhicule automobile, comprenant un circuit de chauffage d'eau 3 pour le chauffage de l'habitacle d'un véhicule électrique.

Cet appareil de chauffage comprend en amont du circuit de chauffage d'eau 3 un dispositif de chauffage électrique 5 additionnel pour chauffer l'eau avant son entrée dans le circuit de chauffage 3.

On a représenté ici le cas d'un circuit d'eau pour le chauffage de l'habitacle d'un véhicule électrique.

Bien entendu, on peut aussi prévoir que le dispositif de chauffage électrique 5 soit disposé en amont de l'évaporateur d'une boucle de climatisation apte à fonctionner en mode pompe à chaleur, de façon à chauffer le fluide réfrigérant.

On pourrait encore prévoir un tel dispositif de chauffage électrique 5 en amont d'un échangeur de chaleur utilisant le liquide de refroidissement du moteur thermique comme liquide caloporteur,

On pourrait aussi prévoir un tel dispositif de chauffage électrique 5 en amont d'un échangeur de chaleur destiné à la régulation thermique d'un dispositif de stockage de l'énergie électrique, parfois qualifié d'ensemble de batteries, pour un véhicule à propulsion électrique ou hybride.

En référence à la figure 2, on décrit maintenant plus en détail un premier mode de réalisation de ce dispositif de chauffage électrique 5.

Le dispositif de chauffage 5 comporte :
- un module de chauffe 7, et
- un moyen de commande 9 du module de chauffe 7.

Le module de chauffe 7 est reçu dans un logement associé du dispositif de chauffage 5.

Ce module de chauffe 7 présente une forme générale sensiblement cylindrique.

Le module de chauffe 7 comprend un noyau central 11 et une enceinte 13 de forme sensiblement cylindrique présentant un moyen de chauffe et entourant le noyau central 11.

Le noyau central 11 et l'enceinte 13 définissent un circuit de guidage 15 du liquide à chauffer entre le noyau central 11 et l'enceinte 13.

Ainsi, la surface externe du noyau central 11 et la surface interne de l'enceinte 13 définissent un volume de circulation du liquide à chauffer. On pourrait prévoir des éléments de perturbation de l'écoulement du liquide dans le circuit de guidage 15 de façon à augmenter l'échange thermique entre le liquide et l'enceinte 13.

Le noyau central 11 peut être réalisé sous la forme d'un corps creux.

Ce creux, autrement dit la cavité interne 12 du noyau 11, joue avantageusement le rôle de vase d'expansion. Une telle cavité interne 12 permet d'absorber les variations de volume du liquide dues au chauffage de ce liquide.

En effet, la cavité interne 12 du noyau central 11 forme une réserve ou moyen de stockage du liquide chauffé ou fluide caloporteur. À cet effet, le noyau central 11 présente un passage 16 communiquant entre le circuit de guidage 15 du liquide et la cavité 12 à l'intérieur du noyau central 11.

Et, ce moyen de stockage du liquide chauffé permet au circuit hydraulique comportant un tel dispositif de chauffage 5 d'absorber l'expansion du fluide chauffé, comme représenté sur la figure 2.

Plus précisément, la cavité interne 12 contient de l'air dans sa partie supérieure et cet air est apte à se comprimer sous l'effet de l'expansion de l'eau. La partie supérieure de la cavité interne 12 en référence à la figure 2, est délimitée de façon schématique et simplifiée par les pointillés.

Le noyau 11 peut comprendre en outre un moyen de contrôle de l'expansion.

Ce moyen de contrôle peut par exemple être du type d'au moins un passage calibré au travers duquel le fluide caloporteur est apte à circuler. Selon cette variante non illustrée, on peut prévoir pour ce faire, une cloison fixée à l'extrémité du noyau 11, définissant ainsi un volume interne du vase d'expansion, et pourvu d'au moins un passage calibré au travers duquel le fluide caloporteur est apte à circuler.

Selon une autre variante non représentée, le moyen de contrôle de l'expansion peut comporter une cloison mobile apte à coulisser le long de la cavité interne 12 du noyau 11 selon l'expansion du fluide.

Par ailleurs, on peut par exemple prévoir une réserve du liquide chauffé de l'ordre de 0,4 à 0,5L.

Le noyau central 11 est par exemple de forme sensiblement cylindrique.

On peut prévoir que le noyau 11 présente une section sensiblement constante ou au contraire évolutive.

Avec une section sensiblement constante du noyau central 11, le liquide s'écoule avec une vitesse constante dans le circuit de guidage 15.

Au contraire, avec une section évolutive la vitesse d'écoulement est modifiée le long du circuit de guidage 15.

En outre, selon le mode de réalisation illustré, le noyau 11 présente sur sa surface externe, c'est-à-dire en regard de la surface interne de l'enceinte 13, une rainure externe 17 sensiblement hélicoïdale. Du fait de cette rainure hélicoïdale 17, le circuit de guidage 15 définit un trajet sensiblement hélicoïdal.

Bien entendu, on pourrait prévoir en variante que la surface externe du noyau 11 soit sans rainure, de manière à définir un circuit de guidage axial parallèlement à l'axe longitudinal A.

Selon encore une autre variante non représentée, le noyau 11 peut présenter sur sa surface externe, une pluralité de rainures circulaires. Dans ce cas, on prévoit un orifice de communication au niveau de chaque rainure circulaire de sorte que l'intérieur du noyau 11 communique avec le circuit de guidage 15. Ainsi, le liquide pénétrant dans un module de chauffe 7 s'écoule à l'intérieur du noyau 11 et autour du noyau 11 de façon circulaire.

L'enceinte 13 est quant à elle bien entendu réalisée sous la forme d'un corps creux de façon à recevoir le noyau central 11 à l'intérieur de l'enceinte 13.

Le noyau central 11 et l'enceinte 13 peuvent être concentriques.

Comme dit précédemment, l'enceinte 13 comprend des éléments chauffants commandés par le moyen de commande 9 pour chauffer le liquide par échange de chaleur entre l'enceinte 13 et le liquide circulant dans le circuit de guidage 15.

L'enceinte 13 peut par exemple présenter au moins une piste résistive connectée au moyen de commande 9 du module de chauffe 7.

La ou les pistes résistives sont par exemple réalisées par sérigraphie sur la surface externe de l'enceinte 13, c'est-à-dire opposée à la surface de l'enceinte 13 en regard du noyau central 11.

De plus, l'enceinte 13 peut comporter des moyens d'étanchéité 18 agencés au niveau des extrémités de l'enceinte 13.

Pour cet exemple de réalisation, le moyen de chauffe de l'enceinte 13 est par exemple configuré pour une puissance de l'ordre de 2, 3, 4 ou encore 6kW en fonction de l'application.

Le dispositif de chauffage 5 comporte en outre au moins une entrée de liquide 19 et au moins une sortie 21 de liquide communiquant avec le circuit de guidage 15 pour permettre l'écoulement du liquide dans le module de chauffe 7.

Ces entrée 19 et sortie 21 sont par exemple réalisées sous la forme de tubulures respectivement d'entrée 19 et de sortie 21.

Les tubulures d'entrée 19 et de sortie 21 sont par exemple respectivement agencées en saillie par rapport au dispositif de chauffage 5. Dans l'exemple illustré, ces canaux d'entrée 23 et de sortie 25 forment également une saillie par rapport au corps du dispositif de chauffe 5 recevant le module de chauffe 7.

La tubulure d'entrée 19 présente un canal d'entrée 23 pour l'admission du liquide. De même, la tubulure de sortie 21 présente un canal de sortie 25 pour l'évacuation du liquide.

Les canaux d'entrée 23 et de sortie 25 peuvent par exemple respectivement ménagés dans le corps du dispositif 5 perpendiculairement à l'axe longitudinal A de l'enceinte cylindrique 13.

Selon l'exemple illustré, les canaux d'entrée 23 et de sortie 25 sont respectivement ménagés dans le corps du dispositif 5 perpendiculairement à l'axe longitudinal du module de chauffe 7.

Les canaux d'entrée 23 et de sortie 25 s'étendent par exemple sensiblement radialement par rapport à l'enceinte cylindrique 13 et au noyau 11, et donc selon cet exemple par rapport au module de chauffe 7.

En outre, les canaux d'entrée 23 et de sortie 25 peuvent être agencés sur deux côtés opposés du module de chauffe. Les canaux d'entrée 23 et de sortie 25 peuvent aussi être agencés de façon opposée, c'est-à-dire aux deux extrémités opposées du dispositif 5, comme dans l'exemple de la figure 2.

Par ailleurs, le moyen de commande 9 peut quant à lui comporter au moins un support de circuit électrique tel qu'une carte à circuit imprimé 27, PCB en anglais pour "Printed circuit board", et des composants électroniques et/ou électriques 29 portés par le support 27. Ces composants électroniques et/ou électriques peuvent par exemple comporter un microcontrôleur et des contacts électriques connectés aux pistes résistives de l'enceinte 13. Les contacts électriques sont par exemple portés par une face opposée du support PCB 27 à la face portant par exemple le microcontrôleur.

Le support 27 peut encore porter au moins un connecteur 31 d'alimentation et de signal.

Le dispositif de chauffage 5 peut comporter en outre un couvercle de protection 33 du moyen de commande 9. Ce couvercle 33 présente une ouverture pour laisser passer le connecteur 31.

Le moyen de commande 9 est disposé à une extrémité longitudinale de l'enceinte cylindrique 13 portant le moyen de chauffe.

Dans ce cas, le moyen de commande 9 est placé au niveau de l'extrémité du logement du dispositif de chauffage 5 recevant le module de chauffe 7. Le dispositif 5 comporte alors un support 35 du moyen de commande 9 agencé de manière à fermer ce logement recevant le module de chauffe 7.

Le support 35 du moyen de commande 9 peut être agencé en appui contre le noyau 11 du module de chauffe 7 comme l'illustre l'exemple de la figure 2.

De plus, le couvercle de protection 33 du moyen de commande 9 est fixé à ce support 35 du moyen de commande 9.

On peut prévoir en outre, un moyen d'étanchéité 37 entre le couvercle de protection 33 du moyen de commande 9 et le support 35 du moyen de commande 9. Il s'agit par exemple d'un joint torique 37.

Un dispositif de chauffage 5 ainsi réalisé permet de limiter la perte de charge tout en présentant un encombrement réduit par rapport à certaines solutions de l'art antérieur.

On comprend donc qu'un dispositif de chauffage 5 réalisé selon le mode de réalisation précédemment décrit avec un ou plusieurs modules de chauffe 7 tels que décrits permettant de définir un circuit de guidage à l'intérieur du module de chauffe 7 permet de limiter la perte de charge tout en présentant un encombrement réduit.

## Revendications

1. Dispositif de chauffage électrique de liquide pour véhicule automobile, ledit dispositif de chauffage comprenant au moins un module de chauffe dudit liquide, ledit au moins un module de chauffe comprenant :
- une enceinte (13) sensiblement cylindrique présentant au moins un moyen de chauffe dudit liquide et délimitant un circuit de guidage (15) du liquide à chauffer, et
- un moyen de commande (9) dudit au moins un moyen de chauffe agencé dans le prolongement de l'axe longitudinal de ladite enceinte cylindrique (13),
**caractérisé en ce qu'**il comporte au moins un canal d'entrée (23) de liquide et au moins un canal de sortie (25) de liquide communiquant avec ledit circuit de guidage (15) dudit liquide, lesdits canaux d'entrée (23) et de sortie (25) débouchant dans le circuit de guidage (15), et les canaux d'entrée (23) et de sortie (25) sont ménagés dans ledit dispositif de façon sensiblement perpendiculaire à l'axe longitudinal (A) de ladite enceinte cylindrique (13), ledit au moins un module de chauffe (7) est reçu dans un logement associé du dispositif de chauffage (5), le module de chauffe (7) présente une forme générale sensiblement cylindrique et le module de chauffe (7) comprend un noyau central (11) agencé à l'intérieur de ladite enceinte cylindrique (13) qui entoure le noyau central (11), le circuit de guidage (15) dudit liquide étant défini entre ledit noyau (11) et ladite enceinte cylindrique (13), l'enceinte (13) comprend des éléments chauffants commandés par le moyen de commande (9) pour chauffer le liquide par échange de chaleur entre l'enceinte (13) et le liquide circulant dans le circuit de guidage (15), le moyen de commande (9) étant disposé à une extrémité longitudinale de l'enceinte cylindrique (13) portant les éléments chauffants, le moyen de commande (9) est placé au niveau de l'extrémité du logement du dispositif de chauffage (5) recevant le module de chauffe (7), le dispositif de chauffage (5) comportant alors un support (35) du moyen de commande (9) agencé de manière à fermer ce logement recevant le module de chauffe (7).

2. Dispositif selon l'une des revendications 1, **caractérisé en ce que** ladite enceinte cylindrique (13) présente au moins une piste résistive connectée audit moyen de commande (9).

3. Dispositif selon l'une des revendications 1 ou 2, **caractérisé en ce que** ledit noyau (11) présente une forme générale sensiblement cylindrique.

4. Dispositif selon l'une des revendications 1 à 3, **caractérisé en ce que** ledit noyau (11) présente au moins une rainure externe (17) en regard de ladite enceinte cylindrique, par exemple de forme sensiblement hélicoïdale ou circulaire.

5. Dispositif selon l'une quelconque des revendications 1 à 4, **caractérisé en ce que** ledit noyau (11) présente un creux intérieur communiquant avec ledit circuit de guidage (15) de manière à faire office de réserve dudit liquide chauffé et de vase d'expansion.

6. Dispositif selon l'une quelconque des revendications précédentes, **caractérisé en ce que** lesdits canaux d'entrée (23) et de sortie (25) s'étendent sensiblement radialement par rapport à ladite enceinte cylindrique (13).

7. Dispositif selon l'une quelconque des revendications précédentes, **caractérisé en ce que** lesdits canaux d'entrée (23) et de sortie (25) sont agencés en formant saillie par rapport audit module de chauffe (7).

8. Dispositif selon l'une quelconque des revendications précédentes, **caractérisé en ce que** lesdits canaux d'entrée (23) et de sortie (25) sont agencés de façon opposée sur deux côtés opposés dudit module de chauffe (7).

9. Dispositif selon l'une quelconque des revendications précédentes, **caractérisé en ce qu'**il comporte un couvercle (33) de protection dudit moyen de commande (9).

10. Dispositif selon la revendication 9, **caractérisé en ce qu'**il comporte des moyens d'étanchéité (37) entre ledit couvercle (33) de protection et le support (35) dudit moyen de commande (9).

11. Appareil de chauffage et/ou climatisation pour véhicule automobile, **caractérisé en ce qu'**il comprend au moins un dispositif de chauffage (5) selon l'une quelconque des revendications précédentes.

## Patentansprüche

1. Elektrische Vorrichtung zum Erwärmen einer Flüssigkeit für ein Kraftfahrzeug, wobei die Erwärmungsvorrichtung mindestens ein Heizmodul der Flüssigkeit enthält, wobei das mindestens eine Heizmodul enthält:
- einen im Wesentlichen zylindrischen Behälter (13), der mindestens eine Heizeinrichtung der Flüssigkeit aufweist und einen Führungskreislauf (15) der zu erwärmenden Flüssigkeit begrenzt, und
- eine Steuereinrichtung (9) der mindestens einen Heizeinrichtung, die in der Verlängerung der Längsachse des zylindrischen Behälters (13) angeordnet ist,
**dadurch gekennzeichnet, dass** sie mindestens einen Eingangskanal (23) von Flüssigkeit und mindestens einen Ausgangskanal (25) von Flüssigkeit aufweist, die mit dem Führungskreislauf (15) der Flüssigkeit verbunden sind, wobei die Eingangs- (23) und Ausgangskanäle (25) in den Führungskreislauf (15) münden, und die Eingangs- (23) und Ausgangskanäle (25) in der Vorrichtung im Wesentlichen lotrecht zur Längsachse (A) des zylindrischen Behälters (13) vorgesehen sind, wobei das mindestens eine Heizmodul (7) in einer der Erwärmungsvorrichtung (5) zugeordneten Aufnahme aufgenommen wird, wobei das Heizmodul (7) eine im Wesentlichen zylindrische allgemeine Form aufweist und das Heizmodul (7) einen zentralen Kern (11) enthält, der im Inneren des zylindrischen Behälters (13) angeordnet ist, der den zentralen Kern (11) umgibt, wobei der Führungskreislauf (15) der Flüssigkeit zwischen dem Kern (11) und dem zylindrischen Behälter (13) definiert ist, wobei der Behälter (13) Heizelemente enthält, die von der Steuereinrichtung (9) gesteuert werden, um die Flüssigkeit durch Wärmeaustausch zwischen dem Behälter (13) und der im Führungskreislauf (15) fließenden Flüssigkeit zu erwärmen, wobei die Steuereinrichtung (9) an einem Längsende des die Heizelemente tragenden zylindrischen Behälters (13) angeordnet ist, wobei die Steuereinrichtung (9) im Bereich des Endes der Aufnahme der Erwärmungsvorrichtung (5) angeordnet ist, die das Heizmodul (7) aufnimmt, wobei die Erwärmungsvorrichtung (5) dann einen Träger (35) der Steuereinrichtung (9) aufweist, der so angeordnet ist, dass er diese das Heizmodul (7) aufnehmende Aufnahme verschließt.

2. Vorrichtung nach einem der Ansprüche 1, **dadurch gekennzeichnet, dass** der zylindrische Behälter (13) mindestens eine Widerstandsbahn aufweist, die mit der Steuereinrichtung (9) verbunden ist.

3. Vorrichtung nach einem der Ansprüche 1 oder 2, **dadurch gekennzeichnet, dass** der Kern (11) eine im Wesentlichen zylindrische allgemeine Form aufweist.

4. Vorrichtung nach einem der Ansprüche 1 bis 3, **dadurch gekennzeichnet, dass** der Kern (11) mindestens eine äußere Rille (17) gegenüber dem zylindrischen Behälter aufweist, zum Beispiel im Wesentlichen spiralförmig oder kreisförmig.

5. Vorrichtung nach einem der Ansprüche 1 bis 4, **dadurch gekennzeichnet, dass** der Kern (11) eine innere Vertiefung aufweist, die mit dem Führungskreislauf (15) in Verbindung steht, um als Vorratsbehälter der erwärmten Flüssigkeit und als Ausdehnungsgefäß zu dienen.

6. Vorrichtung nach einem der vorhergehenden Ansprüche, **dadurch gekennzeichnet, dass** die Eingangs- (23) und Ausgangskanäle (25) sich im Wesentlichen radial bezüglich des zylindrischen Behälters (13) erstrecken.

7. Vorrichtung nach einem der vorhergehenden Ansprüche, **dadurch gekennzeichnet, dass** die Eingangs- (23) und Ausgangskanäle (25) angeordnet sind, indem sie bezüglich des Heizmoduls (7) vorstehen.

8. Vorrichtung nach einem der vorhergehenden Ansprüche, **dadurch gekennzeichnet, dass** die Eingangs- (23) und Ausgangskanäle (25) gegenüberliegend auf zwei gegenüberliegenden Seiten des Heizmoduls (7) angeordnet sind.

9. Vorrichtung nach einem der vorhergehenden Ansprüche, **dadurch gekennzeichnet, dass** sie einen Schutzdeckel (33) der Steuereinrichtung (9) aufweist.

10. Vorrichtung nach Anspruch 9, **dadurch gekennzeichnet, dass** sie Dichtungseinrichtungen (37) zwischen dem Schutzdeckel (33) und dem Träger (35) der Steuereinrichtung (9) aufweist.

11. Heiz- und/oder Klimatisierungsgerät für ein Kraftfahrzeug, **dadurch gekennzeichnet, dass** es mindestens eine Erwärmungsvorrichtung (5) nach einem der vorhergehenden Ansprüche enthält.

## Claims

1. Electrical liquid heating device for a motor vehicle, said heating device comprising at least one module for heating said liquid, said at least one heating module comprising:
- an approximately cylindrical enclosure (13) having at least one means for heating said liquid and delimiting a circuit (15) for guiding the liquid to be heated, and
- a control means (9) of said at least one heating means, positioned in continuation of the longitudinal axis of said cylindrical enclosure (13), **characterized in that** it has at least one liquid inlet canal (23) and at least one liquid outlet canal (25) communicating with said circuit (15) for guiding said liquid, said inlet canal (23) and outlet canal (25) leading into the guiding circuit (15), and the inlet canal (23) and outlet canal (25) are provided in said device in a manner approximately perpendicular to the longitudinal axis (A) of said cylindrical enclosure (13), said at least one heating module (7) is accommodated in an associated housing of the heating device (5), the heating module (7) has an approximately cylindrical overall shape and the heating module (7) comprises a central core (11) arranged inside said cylindrical enclosure (13) which surrounds the central core (11), the circuit (15) for guiding said liquid being defined between said core (11) and said cylindrical enclosure (13), the enclosure (13) comprises heating elements controlled by the control means (9) for heating the liquid by heat exchange between the enclosure (13) and the liquid circulating in the guiding circuit (15), the control means (9) being arranged at a longitudinal end of the cylindrical enclosure (13) carrying the heating means, the control means (9) is positioned in the region of the end of the housing of the heating device (5) accommodating the heating module (7), the heating device (5) thus having a support (35) for the control means (9) positioned so as to close this housing accommodating the heating module (7).

2. Device according to one of Claims 1, **characterized in that** said cylindrical enclosure (13) has at least one resistive track connected to said control means (9).

3. Device according to either of Claims 1 and 2, **characterized in that** said core (11) has an approximately cylindrical overall shape.

4. Device according to one of Claims 1 to 3, **characterized in that** said core (11) has at least one external groove (17) facing said cylindrical enclosure, for example having an approximately helical or circular shape.

5. Device according to any one of Claims 1 to 4, **characterized in that** said core (11) has an interior hollow communicating with said guiding circuit (15) so as to act as a reserve for said heated liquid and as an expansion vessel.

6. Device according to any one of the preceding claims, **characterized in that** said inlet canal (23) and outlet canal (25) extend approximately radially with respect to said cylindrical enclosure (13).

7. Device according to any one of the preceding claims, **characterized in that** said inlet canal (23) and outlet canal (25) are positioned so as to form a projection with respect to said heating module (7).

8. Device according to any one of the preceding claims, **characterized in that** said inlet canal (23) and outlet canal (25) are positioned in an opposing manner on two opposite sides of said heating module (7).

9. Device according to any one of the preceding claims, **characterized in that** it has a protective cover (33) for said control means (9).

10. Device according to Claim 9, **characterized in that** it has sealing means (37) between said protective cover (33) and the support (35) for said control means (9).

11. Heating and/or air-conditioning unit for a motor vehicle, **characterized in that** it comprises at least one heating device (5) according to any one of the preceding claims.
